# EUROPÄISCHE PATENTSCHRIFT

(11) **EP 4 382 857 B1**
(45) Veröffentlichungstag und Bekanntmachung des Hinweises auf die Patenterteilung: **29.10.2025**
(21) Anmeldenummer: 23210920.7
(22) Anmeldetag: 20.11.2023
(51) Int. Cl.: G01B 11/25, G01M 17/02, B60C 25/00, G01B 15/00, G01B 11/245

(54) **VERFAHREN UND VORRICHTUNG ZUR INSPEKTION VON TECHNISCHEN GUMMIARTIKELN**
METHOD AND APPARATUS FOR INSPECTING TECHNICAL RUBBER ITEMS
PROCÉDÉ ET DISPOSITIF D'INSPECTION D'ARTICLES EN CAOUTCHOUC TECHNIQUE

(30) Priorität: 07.12.2022 DE 102022213226
(43) Veröffentlichungstag der Anmeldung: 12.06.2024
(73) Patentinhaber: Continental Reifen Deutschland GmbH, 30175 Hannover (DE)
(72) Erfinder: Ludwig, Jens, 30165 Hannover (DE); Kirschning, Oliver, 30165 Hannover (DE)
(74) Vertreter: Continental Corporation

(56) Entgegenhaltungen:
- DE-A1- 102019 208 251
- US-A1- 2005 058 333
- US-A1- 2011 288 814

## Beschreibung

Die Erfindung betrifft ein Verfahren zur Inspektion von technischen Gummiartikeln mit metallischen Festigkeitsträgern, wobei die technischen Gummiartikel Fahrzeugreifen oder Komponenten von Fahrzeugreifen sind, wobei ein technischer Gummiartikel mit einer Oberfläche bereitgestellt wird, wobei unter der Oberfläche in einem Einbettungsabstand metallische Festigkeitsträger verlaufen. Zwei oder mehr Radarabstandsmesser vermessen Positionen der Festigkeitsträger, wobei die Strahlung der Radarabstandsmesser zu einem ersten Zeitpunkt zwei oder mehr in einer ersten Richtung gegeneinander verschobene Radarstrahlbereiche auf der Oberfläche des technischen Gummiartikels durchdringt, wobei ein Lichtabstandsmesser die Oberfläche des technischen Gummiartikels vermisst. Eine Relativbewegung wird zwischen dem Gummiartikel einerseits und den Radarabstandmessern und dem Lichtabstandsmesser andererseits vollführt, wobei die Relativbewegung parallel zu der Oberfläche des technischen Gummiartikels und senkrecht zu der ersten Richtung verläuft.

Nach wie vor spielt Automatisierung von industriellen Abläufen eine große Rolle, unter anderem um die Herstellung von Produkten zu beschleunigen und zu vergünstigen. Ein Schritt bei der Herstellung von technischen Gummiartikeln ist die Inspektion des final resultierenden Produkts. Eine Untersuchung bei dieser Inspektion ist die Kontrolle, ob die Festigkeitsträgerlagen des technischen Gummiartikels innerhalb der verschiedenen Kautschuklagen korrekt verlaufen.

DE 102019208251 A1 beschreibt ein Verfahren zur Inspektion von technischen Gummiartikeln mit einer Festigkeitsträgerlage mit den Schritten: B) Messen eines ersten Abstandes mittels einer erste Abstandsmesseinheit, wobei der erste Abstand zwischen einer Messfläche auf einer Oberfläche der metallischen Festigkeitsträger und der ersten Abstandsmesseinheit gemessen wird; C) Messen eines zweiten Abstandes mittels einer zweiten Abstandsmesseinheit, wobei der zweite Abstand zwischen einer relativ zur Messfläche festen Bezugsfläche auf einer Außenwand einer Lage des technischen Gummiartikels und der zweiten Abstandsmesseinheit gemessen wird. Aus den beiden Abständen kann dann eine Lage der Festigkeitsträger unter der Bezugsfläche des Gummiartikels ermittelt werden. Insbesondere werden für die erste Abstandsmesseinheit ein Radarwellensender sowie ein Radarwellenempfänger und für die zweite Abstandsmesseinheit ein Laser sowie ein Laserlichtdetektor vorgesehen, wobei der Laser ein Punktlaser ist.

Eine Limitation des beschriebenen Stands der Technik liegt darin, dass der vermessene Abschnitt des Gummiartikels zunächst im Wesentlichen auf die Größe eines von dem Punktlaser abgedeckten Bereichs beschränkt ist. Um trotzdem Informationen über größere Flächen gewinnen zu können, schlägt DE 102019208251 A1 vor, dass die erste Abstandsmesseinheit mehrere Radarwellensender und Radarwellenempfänger und die zweite Abstandsmesseinheit mehre Laser und mehrere Laserlichtdetektoren umfassen könnte, wobei die Radarwellensender und die Radarwellenempfänger in der ersten Abstandsmesseinheit und die Laser und Laserlichtdetektoren in der zweiten Abstandsmesseinheit so angeordnet sein würden, dass der Abstand zwischen der Messfläche und der Bezugsfläche des technischen Gummiartikels entlang einer zu einer Haupterstreckung senkrecht verlaufenden Quererstreckung des technischen Gummiartikels gemessen werden kann. Am Beispiel eines Fahrzeugreifens wäre die Quererstreckung hierbei die Querrichtung und die Haupterstreckung die Umfangsichtung, wobei der Fahrzeugreifen für einen unidirektionalen Scan entlang der Umfangsrichtung gedreht werden könnte. Diese Lösung ist aufgrund der Vielzahl benötigter Abstandsmesseinheiten jedoch kostenintensiv. Zudem nimmt die Vielzahl benötigter Abstandsmesseinheiten viel Raum ein, was eine Vermessung in schwierig zugänglichen Bereichen, wie beispielsweise dem Inneren eines Fahrzeugreifens deutlich erschwert oder gar unmöglich macht.

Alternativ sieht DE 102019208251 A1 am Beispiel eines Fahrzeugreifens vor, einen Linienscan durch Drehung der ersten und zweiten Abstandsmesseinheit in Querrichtung des Fahrzeugreifens zu vollführen und den Fahrzeugreifen in Umfangsrichtung zu drehen, um auf diese Weise insgesamt einen zweidimensionalen Scan zu erhalten. Ein Nachteil an dieser Lösung ist, dass ein bidirektionaler Scan zeitintensiv ist. Zudem sind beweglich aufgehängte Abstandsmesseinheiten technisch nur unter größerem Aufwand zu realisieren und die Aufhängung und der Aktuator für die Drehung der Abstandsmesseinheiten nehmen zusätzlich zu den eigentlichen Messeinheiten einen gewissen Raum ein.

Der Erfindung liegt die Aufgabe zugrunde, Mittel für eine schnelle Inspektion von technischen Gummiartikeln mit Festigkeitsträgerlage zu schaffen, die insbesondere auch in schwierig zugänglichen Bereichen zum Einsatz kommen können.

Die gestellte Aufgabe wird erfindungsgemäß dadurch gelöst, dass der Lichtabstandsmesser die Oberfläche des technischen Gummiartikels in einer Weise vermisst, dass eine Lichtlinie auf die Oberfläche des technischen Gummiartikels projiziert und ausgewertet wird, wobei die Lichtlinie im Rahmen der Relativbewegung so gegenüber der Oberfläche verschoben wird, dass für jeden Radarabstandsmesser jeweils ein weiterer Zeitpunkt existiert, zu dem die Lichtlinie wenigstens teilweise durch den zu einem jeweiligen Radarabstandsmesser gehörigen Radarstrahlbereich verläuft oder verlaufen ist.

Jeder der weiteren Zeitpunkte kann gegenüber dem ersten Zeitpunkt in der Vergangenheit oder in der Zukunft liegen oder identisch mit dem ersten Zeitpunkt sein.

Die Erfindung setzt sich zunächst über die aus dem Stand der Technik bekannte Konvention hinweg, dass je zu vermessendem Bereich ein Paar aus einem Radarabstandmessgerät und einem Laserabstandsmessgerät benötigt würde, indem sie einen anhand einer auf den Gummiartikel projizierten Lichtlinie arbeitenden Lichtabstandsmesser vorsieht. Zudem wird eine besonders effiziente und raumsparende Möglichkeit gefunden, die Radarabstandmessgeräte und das Lichtabstandsmessgerät zu orientieren und deren Messdaten miteinander zu kombinieren.

Üblicherweise sind in einem Fahrzeugreifen eine Vielzahl von Festigkeitsträgerlagen vorgesehen, insbesondere in den Gürtellagen und in der Karkasse. Im Idealfall haben alle Stränge einer Festigkeitsträgerlage einen einheitlichen Einbettungsabstand zu einer Oberfläche des Gummiartikels. Mitunter kommt es jedoch zu Abweichungen, wenn beispielsweise einzelne Stränge einer Festigkeitsträgerlage lokal näher an der Oberfläche des Gummiartikels oder weiter von dieser entfernt verlaufen. Alternativ oder zusätzlich kann sich der Abstand zwischen Festigkeitsträgerlage und Oberfläche des Gummiartikels auch durch Abnutzung der Oberfläche oder durch lokale Defekte der Oberfläche verkleinern. Es ist wünschenswert, solche Abweichungen mit einer Genauigkeit von 1 mm oder besser ermitteln zu können.

Sofern die Richtungsbezeichnungen axial, in Axialrichtung, radial, in Radialrichtung und in Umfangsrichtung verwendet werden, beziehen sich diese auf einen Fahrzeugreifen und seine bestimmungsgemäße Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Die mit den Merkmalen des Hauptanspruchs erzielten Effekte werden durch bevorzugte Ausführungsformen und Ausgestaltungen unterstützt und weiter verstärkt.

Jeder Radarabstandsmesser umfasst vorzugsweise einen Radarwellensender und einen Radarwellenempfänger, wobei der Radarwellenempfänger von dem Radarwellensender ausgesendete und an den Festigkeitsträgern reflektierte elektromagnetische Strahlung empfängt. Vorzugsweise sind der Radarwellensender und -empfänger in einer kompakten baulichen Einheit untergebracht, wobei die Sende- und Empfangsrichtung dementsprechend aufgrund der Reflexionsgesetze im Wesentlichen parallel zueinander und im Wesentlichen senkrecht zu einer für Radarstrahlen reflektierenden Festigkeitsträgerlage ausgerichtet sind. In dem erfindungsgemäß zu inspizierenden Gummiartikel verlaufen die Festigkeitsträger vorzugsweise weitgehend parallel zu der nächstgelegenen Oberfläche des Gummiartikels, sodass die Messrichtung der Radarmessung wie anspruchsgemäß auch im Wesentlichen senkrecht auf der Oberfläche des Gummiartikels steht.

Die Radarstrahlung eines Radarabstandsmessers durchdringt zu großen Teilen die Oberfläche des Gummiartikels und wird zu großen Teilen an den metallischen Festigkeitsträgern reflektiert. Hierzu besonders geeignete Frequenzen liegen zwischen 5 GHz und 500 GHz. Das Strahlungsbündel des Radarwellensenders hat vorzugsweise einen kleinen Öffnungswinkel und die Messungen erfolgen vorzugsweise in einem kleinen Abstand von etwa 1 mm bis 15 mm, vorzugsweise 4 mm bis 8 mm zu der Oberfläche des Gummiartikels. Wenn die Festigkeitsträger in einem kleinen Einbettungsabstand, beispielsweise von wenigen mm unter der Oberfläche verlaufen, können sowohl die eingestrahlten als auch die reflektierten Radarwellen im Wesentlichen identische Bereiche der Oberfläche des Gummiartikels durchdringen. Als Radarstrahlbereich wird die Fläche auf der Oberfläche des Gummiartikels bezeichnet, aus welcher von einem Radarabstandsmesser ausgesendete und an den Festigkeitsträgern reflektierte Strahlung austritt und von dem Radarabstandsmesser detektiert wird. Der Radarstrahlbereich hat vorzugsweise einen Durchmesser von 5 mm bis 30 mm. Vorzugsweise haben alle Radarstrahlbereiche die gleiche Form und Größe.

Besonders bevorzugt ist eine Ausführung, gemäß der genau drei Radarabstandsmesser in zu der Oberfläche im Wesentlichen senkrechten Richtungen Positionen der Festigkeitsträgern vermessen, wobei die Strahlung der Radarabstandsmesser zu einem ersten Zeitpunkt drei in einer ersten Richtung gegeneinander verschobene Radarstrahlbereiche auf der Oberfläche des technischen Gummiartikels durchdringt. Vorzugsweise sind die drei Radarstrahlbereiche entlang der ersten Richtung um gleichmäßige Abstände gegeneinander verschoben.

Vorzugsweise sind zwei benachbarte Radarstrahlbereiche in der ersten Richtung um nicht mehr als einen Durchmesser eines Radarstrahlbereichs gegeneinander verschoben. Dies gilt vorzugsweise für alle entlang der ersten Richtung zueinander benachbarten Radarstrahlbereiche. Weiter vorzugsweise besteht zwischen zwei benachbarten Radarstrahlbereichen entlang der ersten Richtung ein Überlapp zwischen 1/10 und 1/2 des Durchmessers des Radarstrahlbereichs. Auf diese Weise wird eine lückenlose Abdeckung des Gummiartikels zwischen entlang der ersten Richtung vordersten und hintersten Radarstrahlbereichen gewährleistet.

In einer bevorzugten Ausführungsform sind die Radarstrahlbereiche zusätzlich in einer zweiten Richtung gegeneinander verschoben, wobei die zweite Richtung senkrecht zu der ersten Richtung verläuft. In einer Ausführungsform sind die Radarabstandsmesser entlang der zweiten Richtung dicht nebeneinander angeordnet und senden und empfangen in zu der zweiten Richtung senkrechter Richtung, sodass die Radarstrahlbereiche entlang der zweiten Richtung ebenso dicht nebeneinander angeordnet sind. Die Verschiebung der Radarstrahlbereiche entlang der ersten Richtung kann beispielsweise durch Rotation der Radarabstandsmesser um eine zu der zweiten Richtung parallele Achse erreicht werden, wie unten in der Figurenbeschreibung am Beispiel einer Vorrichtung zur Inspektion eines Fahrzeugreifens näher erläutert wird.

Wenn die Radarstrahlbereiche in der zweiten Richtung gegeneinander verschoben sind, so liegen sie in Richtung der Relativbewegung hintereinander. Dies kann bedeuten, dass die weiteren Zeitpunkte, zu denen die Lichtlinie durch die einzelnen Radarstrahlbereiche verläuft oder verlaufen ist, unterschiedliche Zeitpunkte sind, zumindest in dem Fall, dass die Lichtlinie senkrecht zu der Relativbewegung verläuft.

Ein Radarabstandmesser misst Abstände zu den Festigkeitsträgern in an sich bekannter Weise. Vorzugsweise arbeitet der Radarabstandsmesser unter Modulation des ausgesendeten Signals.

Der Lichtabstandsmesser umfasst eine Lichtquelle und einen Lichtempfänger, wobei der Lichtempfänger von der Lichtquelle ausgesendete und an der Oberfläche des Gummiartikels reflektierte Strahlung empfängt. Besonders geeignete Wellenlängen können zwischen 250 nm und 1100 nm liegen und betragen vorzugsweise zwischen 200 nm und 800 nm.

Die aus dem Lichtabstandsmesser projizierte Lichtlinie verläuft vorzugsweise parallel zu der ersten Richtung. Andersherum sind folglich die Radarstrahlbereiche parallel zu der Erstreckung der Lichtlinie auf der Oberfläche des Gummiartikels gegeneinander verschoben. Hierdurch wird jene anspruchsgemäße Vorgabe strukturell erleichtert, dass die Lichtlinie zu weiteren Zeitpunkten durch die Radarstrahlbereiche verlaufen soll: Würde die Lichtlinie stattdessen parallel zu der Richtung der Relativbewegung verlaufen, so könnte sie bestenfalls durch einen der Radarstrahlbereiche verlaufen. In dem Fall, dass die Radarstrahlbereiche nur in der ersten, nicht aber in der zweiten Richtung (bzw. der Richtung der Relativbewegung) gegeneinander verschoben sind, kann eine parallel zu der ersten Richtung verlaufende Lichtlinie zu einem gemeinsamen weiteren Zeitpunkt durch alle Radarstrahlbereiche verlaufen.

Vorzugsweise existiert für jeden Radarabstandsmesser jeweils ein weiterer Zeitpunkt, zu dem die Lichtlinie vollständig durch den zu einem jeweiligen Radarabstandsmesser gehörigen Radarstrahlbereich verläuft oder verlaufen ist. Bei einem im Wesentlichen kreisförmigen Radarstrahlbereich erstreckt sich die Lichtlinie zu dem weiteren Zeitpunkt beispielsweise vorzugsweise über den gesamten Durchmesser des Radarstrahlbereichs. Auf diese Weise decken der Lichtabstandsmesser und die Radarabstandsmesser im Verlaufe der Relativbewegung einen möglichst großen gemeinsamen Bereich des Gummiartikels ab.

Besonders gut lässt sich der Lichtabstandsmesser technisch realisieren, wenn die Lichtlinie eine Laserlinie ist, wenn also die Lichtquelle des Lichtabstandsmessers eine Laserquelle ist, die ein aufgefächertes Strahlenbündel aussendet, welches auf der Oberfläche des Gummiartikels als Linie reflektiert wird.

Der Lichtabstandsmesser arbeitet vorzugsweise nach der an sich bekannten Lichtschnittmethode. Dem Grundprinzip nach wird hierzu die auf die Oberfläche projizierte Lichtlinie aus einem Winkel gegenüber der Projektionsrichtung mit einer Kamera aufgenommen, woraufhin aus der Lage der Lichtlinie in dem resultierenden zweidimensionalen Kamerabild per Triangulation ein Abstand der Oberfläche zu dem Lichtabstandsmesser abgeleitet werden kann.

Zudem können aus der Form der Lichtlinie in dem zweidimensionalen Kamerabild per Triangulation Höhenunterschiede innerhalb der Oberfläche abgeleitet werden. Vorzugsweise vermisst der Lichtabstandsmesser entlang der gesamten Lichtlinie eine Topographie der Oberfläche. Die laterale Auflösung kann hierbei zwischen 0,01 mm und 1 mm, vorzugsweise bei etwa 100 µm liegen. Die vertikale Auflösung, senkrecht zu der Oberfläche kann zwischen 1 µm und 100 µm, vorzugsweise bei etwa 10 µm liegen.

Die Relativbewegung wird vorzugsweise kontinuierlich und mit gleichbleibender Geschwindigkeit vollzogen, wobei die Radarabstandsmesser und der Lichtabstandsmesser mit kontinuierlichen Abtastraten Abstände zu den Festigkeitsträgern bzw. Abstände zu der Oberfläche des technischen Gummiartikels ermitteln. Hierbei werden die Abstände vorzugsweise als Zeitreihen aufgezeichnet. Auf diese Weise ergeben sich Messpunkte zu in regelmäßigen Abständen entlang der Richtung der Relativbewegung angeordneten Positionen auf der Oberfläche des Gummiartikels.

Die aufgezeichneten Abstände aus den Radarabstandmessern und dem Lichtabstandsmesser können einander so zugeordnet werden, dass Abstände zu den Festigkeitsträgern und Abstände zu der Oberfläche aus in Richtung der Relativbewegung möglichst nahe beieinander gelegenen Positionen miteinander gepaart werden. Beispielweise können die Abstandsdaten aus einem ersten Radarabstandsmesser, die auf zu dem ersten Zeitpunkt aufgenommenen Messungen beruhen, mit Abstandsdaten aus dem Lichtabstandsmesser kombiniert werden, die auf Messungen zu dem weiteren Zeitpunkt beruhen. Auf diese Weise können Messdaten aus im Wesentlichen identischen Bereichen des Gummiartikel miteinander kombiniert werden, obwohl sie von unterschiedlichen Messinstrumenten, zu unterschiedlichen Zeitpunkten, im Verlauf der Relativbewegung aufgenommen wurden.

Der Lichtabstandsmesser kann entlang der Lichtlinie abschnittsweise mehrere Abstände aufzeichnen. Die aufgezeichneten Abstände aus den Radarabstandmessern und dem Lichtabstandsmesser können einander dann so zugeordnet werden, dass Abstände zu den Festigkeitsträgern aus einem jeweiligen Radarabstandsmesser mit solchen Abständen zu der Oberfläche aus dem Lichtabstandsmesser gepaart werden, die aus einem Abschnitt der Lichtlinie stammen, der im Rahmen der Relativbewegung so gegenüber der Oberfläche verschoben wird, dass der Abschnitt zu einem der weiteren Zeitpunkte wenigstens teilweise durch den Radarstrahlbereich des jeweiligen Radarabstandsmessers verläuft oder verlaufen ist. Wenn beispielsweise ein erster und ein zweiter Radarstrahlbereich entlang der ersten Richtung verschoben sind, kann ein erster Abschnitt der Lichtlinie zu einem weiteren Zeitpunkt durch den ersten Radarstrahlbereich und ein zweiter Abschnitt der Lichtlinie zu dem gleichen weiteren Zeitpunkt oder einem abweichenden weiteren Zeitpunkt durch den zweiten Radarstrahlbereich verlaufen. Auf diese Weise erfolgt auch entlang der ersten Richtung eine möglichst gute örtliche Zuordnung zwischen den Abstandsdaten der Radarabstandsmesser und denen des Lichtabstandsmessers.

Aus den solchermaßen in Richtung der Relativbewegung und/oder entlang der ersten Richtung gepaarten Abstandsdaten können mit guter lateraler Auflösung lokale Einbettungstiefen der Festigkeitsträger unter der Oberfläche des Gummiartikels ermittelt werden. Die laterale Bestimmungsgenauigkeit (parallel zu der Oberfläche) der Einbettungstiefe kann in einer Größenordnung von 10 mm liegen. Die vertikale Bestimmungsgenauigkeit (in Normalrichtung auf der Oberfläche), also der Fehlerbalken der experimentell bestimmten Einbettungstiefe kann in einer Größenordnung von 10 µm liegen.

Die Relativbewegung kann durch eine Bewegung des Gummiartikels, durch eine Bewegung der Vorrichtung zur Inspektion des Gummiartikels oder durch beides bewirkt werden. Beispielsweise ist denkbar, die Radarabstandsmesser und den Lichtabstandsmesser entlang der Oberfläche einer flach ausgedehnten Gummischicht zu verfahren und auf diese Weise einen Scan der Oberfläche und der darunter eingebetteten Festigkeitsträger zu vollführen. Vorzugsweise wird die Relativbewegung jedoch durch eine Bewegung des Gummiartikels realisiert. Gemäß einer Ausführungsform ist der technische Gummiartikel ein Fahrzeugreifen, wobei die Oberfläche eine innere Oberfläche des Fahrzeugreifens ist. Hierbei sind die Radarstrahlungsbereiche vorzugsweise in einem Schulterbereich des Fahrzeugreifens angeordnet, wo geringe Toleranzen für die Lage der Festigkeitsträger herrschen bzw. wo es leicht zu Abweichungen in der Einbettungstiefe kommen kann. Die anspruchsgemäße erste Richtung entspricht hierbei vorzugsweise der Querrichtung des Fahrzeugreifens, wobei die Relativbewegung durch Rotation des Fahrzeugreifens um die Axialrichtung vollzogen wird. Auf diese Weise erfolgt ein Scan des Schulterbereichs des Fahrzeugreifens entlang der Umfangsrichtung, während in Querrichtung parallele Messungen vollzogen werden.

Die Erfindung betrifft außerdem eine Vorrichtung zur Inspektion von technischen Gummiartikeln mit metallischen Festigkeitsträgern, wobei die technischen Gummiartikel (1) Fahrzeugreifen oder Komponenten von Fahrzeugreifen sind, umfassend zwei oder mehr Radarabstandsmesser, einen Lichtabstandsmesser und ein Relativbewegungsmittel, wobei die Radarabstandmesser so ausgerichtet sind, dass ihre Strahlung zu einem ersten Zeitpunkt zwei oder mehr in einer ersten Richtung gegeneinander verschobene Bereiche auf einer Oberfläche des technischen Gummiartikels durchdringen kann, wobei das Relativbewegungsmittel dazu ausgelegt ist, eine Relativbewegung zwischen dem Gummiartikel einerseits und den Radarabstandmessern und dem Lichtabstandsmesser andererseits zu vollführen, wobei die Relativbewegung parallel zu der Oberfläche des technischen Gummiartikels und senkrecht zu der ersten Richtung verläuft. Der Lichtabstandsmesser ist dazu ausgelegt ist, eine Lichtlinie auf die Oberfläche des technischen Gummiartikels zu projizieren und auszuwerten, wobei die Vorrichtung so eingerichtet ist, dass die Lichtlinie im Rahmen der Relativbewegung so gegenüber der Oberfläche verschoben werden kann, dass für jeden Radarabstandsmesser jeweils ein weiterer Zeitpunkt existiert, zu dem die Lichtlinie wenigstens teilweise durch den zu einem jeweiligen Radarabstandsmesser gehörigen Radarstrahlbereich verläuft oder verlaufen ist. Die Vorrichtung eignet sich zum Durchführen des erfindungsgemäßen Verfahrens.

Es können Mittel zum Halten der Radarabstandsmesser und des Lichtabstandsmessers sowie zum Halten des Gummiartikels vorgesehen sein. Ein Mittel zum Halten der Radarabstandsmesser und des Lichtabstandsmessers kann ein Roboterarm sein. Das Relativbewegungsmittel kann ein Mittel zur Aufhängung und Rotation eines Fahrzeugreifens sein.

Die Vorrichtung ist vorzugsweise zur Inspektion von Fahrzeugreifen ausgelegt, wobei die Oberfläche eine innere Oberfläche des Fahrzeugreifens ist und wobei die erste Richtung die Querrichtung des Fahrzeugreifens ist. Die Verschiebung der Radarstrahlbereiche in der ersten Richtung wird hierbei vorzugsweise dadurch erreicht wird, dass die Radarabstandsmesser um eine gemeinsame Achse verdreht angeordnet sind. Die Achse kann parallel zu einer Tangente an dem Umfang des Fahrzeugreifens verlaufen und die Radarabstandsmesser können so gegeneinander verdreht sein, dass zugehörige Radarstrahlbereiche einen Schulterbereich des Fahrzeugreifens in verschiedenen, einander überlappenden Bereichen entlang der Querrichtung abdecken.

Die Vorrichtung kann mit Merkmalen fortgebildet werden, die im Zusammenhang mit dem erfindungsgemäßen Verfahren beschrieben sind. Das Verfahren kann mit Merkmalen fortgebildet werden, die im Zusammenhang mit der erfindungsgemäßen Vorrichtung beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine Schnittansicht eines Fahrzeugreifens in einem radial äußeren Bereich,
Figur 2 schematisch eine seitliche Ansicht einer erfindungsgemäßen Vorrichtung zur Inspektion von technischen Gummiartikeln, angeordnet in einem Fahrzeugreifen,
Figur 3 schematisch eine Anordnung von drei Radarstrahlbereichen und einer Lichtlinie auf einem zu inspizierenden Bereich eines technischen Gummiartikels, hier ein Schulterbereich eines Fahrzeugreifens.

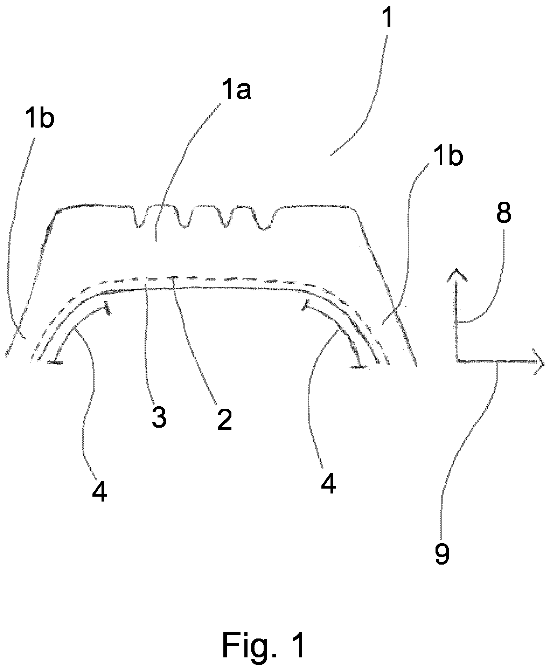

Figur 1 zeigt einen Laufstreifen 1a mit Profil und die radial oberen Ausläufer von Seitenwänden 1b eines Fahrzeugreifens 1. Als gestrichelte Linie ist der Verlauf von Festigkeitsträgern 2 in einer Karkasse 3 des Fahrzeugreifens 1 dargestellt. Von besonderem Interesse bei der Inspektion eines frisch produzierten Fahrzeugreifens 1 ist der Verlauf der Festigkeitsträger 2 unter der Oberfläche der Karkasse 3, insbesondere in den Schulterbereichen des Fahrzeugreifens 1. Die entsprechenden sensiblen Bereiche 4 sind in der Schnittansicht aus Figur 1 gekennzeichnet und erstrecken sich zusätzlich in Umfangsrichtung 10 des Fahrzeugreifens 1. In dem abgebildeten Koordinatenkreuz sind die Radialrichtung 8 und die Axialrichtung 9 ausgezeichnet, wobei die Umfangsrichtung 10 senkrecht auf der Zeichnungsebene steht.

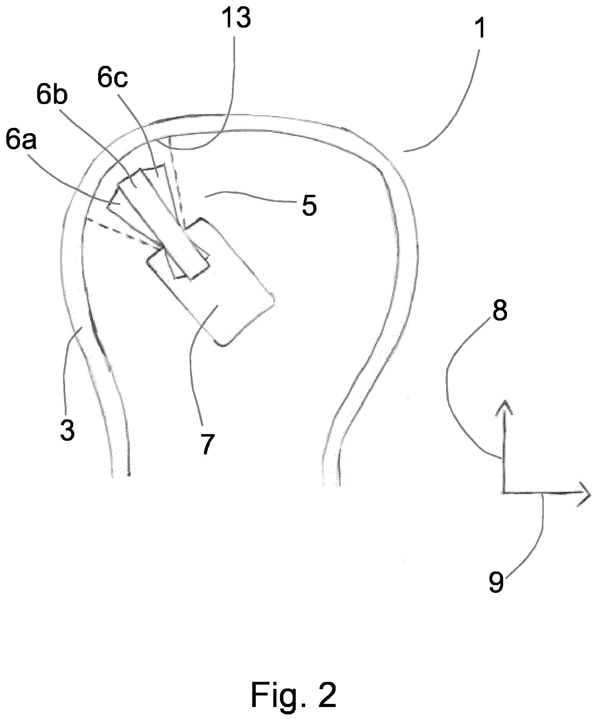

Figur 2 zeigt eine erfindungsgemäßen Vorrichtung 5 zur Inspektion von technischen Gummiartikeln 1 mit drei Radarabstandsmessern 6a, 6b, 6c und einem Lichtabstandsmesser 7. Die Vorrichtung 5 ist in einem Fahrzeugreifen 1 angeordnet, von dem in Figur 2 nur schematisch die Karkasse 3 angedeutet ist.

Die Radarabstandsmesser 6a, 6b, 6c sind um eine gemeinsame Achse gegeneinander verdreht, wobei die Verdrehungsachse senkrecht auf der Zeichnungsebene steht und parallel bzw. tangential zu der Umfangsrichtung 10 des Fahrzeugreifens 1 ausgerichtet ist. Durch die Verdrehung können in Figur 2 nicht gezeigte Radarstrahlbereiche 11a, 11b, 11c in einer ersten Richtung gegeneinander verschoben werden, wobei die erste Richtung innerhalb der Zeichnungsebene und in Querrichtung 12 des Fahrzeugreifens verläuft, sodass die Radarstrahlbereiche 11a, 11b, 11c auf der inneren Oberfläche des Fahrzeugreifens 1 den sensiblen Bereich 4 an der Schulter des Fahrzeugreifens 1 vollständig abdecken können. Der Lichtabstandsmesser 7 strahlt ein Lichtbündel aus, welches in der ersten Richtung so wie in Figur 2 durch gestrichelte Linien angedeutet aufgefächert ist, sodass eine in Querrichtung 12 des Fahrzeugreifens 1 verlaufende Lichtlinie 13 auf die innere Oberfläche des Fahrzeugreifens 1 projiziert wird. In Figur 2 nicht gezeigt sind Mittel zur Relativbewegung zwischen den Radarabstandsmessern 6a, 6b, 6c und dem Lichtabstandsmesser 7 auf der einen Seite und dem Fahrzeugreifen 1 auf der anderen Seite. Ebenso nicht gezeigt sind Mittel zum Halten der erfindungsgemäßen Vorrichtung 5 und/oder des Fahrzeugreifens 1.

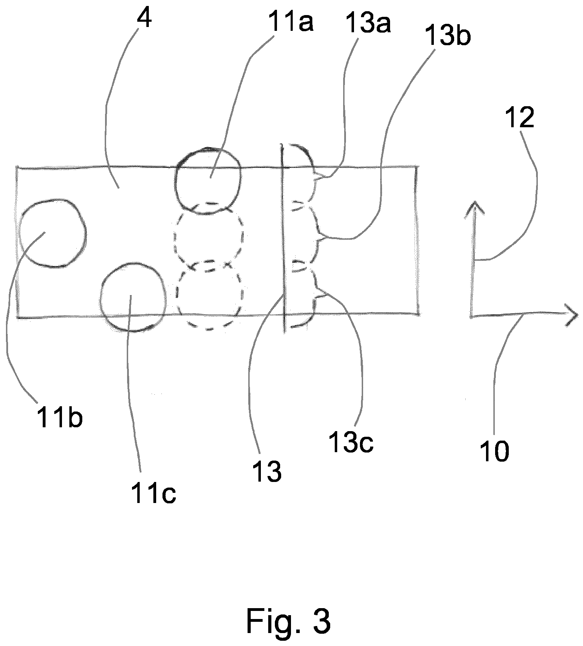

Figur 3 zeigt einen Ausschnitt des sensiblen Bereichs 4 an der inneren Oberfläche des Fahrzeugreifens 1. Wie dem Koordinatenkreuz zu entnehmen ist, erstreckt sich der sensible Bereich 4 in Querrichtung 12 des Fahrzeugreifens 1, wie auch in Figur 1 zu erkennen, und zusätzlich in Umfangsrichtung 10 über den gesamten Umfang des Fahrzeugreifens 1, wobei in Figur 3 nur ein Abschnitt der Umfangserstreckung abgebildet ist. Die innere Oberfläche des Fahrzeugreifens 1 ist in dem sensiblen Bereich 4 entlang der Querrichtung 12 und entlang der Umfangsrichtung 10 mit jeweiligen Krümmungsradien gekrümmt, in Figur 3 jedoch der Einfachheit halber als flache Projektion dargestellt. In Querrichtung 12 verläuft die auf die innere Oberfläche des Fahrzeugreifens 1 projizierte Lichtlinie 13 über den gesamten sensiblen Bereich 4. Mit durchgezogenen Kreislinien sind die drei in der ersten Richtung, also in Querrichtung 12 gegeneinander verschobenen Radarstrahlbereiche 11a, 11b, 11c abgebildet. Die Radarstrahlbereiche 11a, 11b, 11c sind zusätzlich in einer zu der ersten Richtung senkrechten zweiten Richtung, nämlich entlang der Umfangsrichtung 10 gegeneinander verschoben. Die gestrichelten Linien zeigen, wie die Radarstrahlbereiche 11a, 11b, 11c einander leicht überlappen würden, wenn die Verschiebung in der zweiten Richtung nicht gegeben wäre. Durch den Überlapp decken die Radarstrahlbereiche 11a, 11b, 11c den sensiblen Bereich 4 in der ersten Richtung vollständig ab.

Im Rahmen des erfindungsgemäßen Verfahrens senden die Radarabstandmesser 6a, 6b, 6c Radarstrahlen in Richtung des Fahrzeugreifens 1, wobei ein Großteil der Radarstrahlung die Kautschukschichten des Fahrzeugreifens 1 durchdringt und auf die metallischen Festigkeitsträger 2 der Karkasse 3 trifft, wobei wiederum ein Großteil der auf die Festigkeitsträger 2 treffenden Strahlung reflektiert wird, aus den Radarstrahlbereichen 11a, 11b, 11c an der inneren Oberfläche des Fahrzeugreifens 1 austritt und von Radarempfängern in den Radarabstandsmessern 6a, 6b, 6c detektiert wird. Hierbei wird aus dem ersten Radarstrahlbereich 11a austretende Strahlung von dem ersten Radarabstandsmesser 6a detektiert und wurde davor auch aus diesem in Richtung des sensiblen Bereichs 4 ausgesendet; gleiches gilt für den zweiten Radarstrahlbereich 11b und den zweiten Radarabstandsmesser 6b sowie für den dritten Radarstrahlbereich 11c und den dritten Radarabstandsmesser 6c. Mit geeigneten Auswertungsmitteln können aus den Rohdaten der Radarabstandsmesser 6a, 6b, 6c Abstände zwischen den Radarabstandsmessern 6a, 6b, 6c und den Festigkeitsträgern 2 bestimmt werden.

Die auf die innere Oberfläche des Fahrzeugreifens 1 projizierte Lichtlinie 13 wird mit einer in dem Lichtabstandsmesser 7 integrierten Kamera detektiert; anhand der Lage und Form der Lichtlinie 13 in dem sensiblen Bereich 4 können der Abstand der inneren Oberfläche des Fahrzeugreifens 1 zu dem Lichtabstandsmesser 7 und die Topographie der Oberfläche mit geeigneten Auswertungsmitteln bestimmt werden. Hierbei können die Abstände eines ersten, zweiten und dritten Abschnitts 13a, 13b, 13c der Lichtlinie 13 zu dem Lichtabstandsmesser 7 getrennt voneinander bestimmt werden.

Weiter im Rahmen des erfindungsgemäßen Verfahrens wird der Fahrzeugreifen 1 um eine entlang der Axialrichtung 9 ausgerichtete Achse gedreht, sodass sich der sensible Bereich 4 in Umfangsrichtung 10 unter der erfindungsgemäßen Vorrichtung 5 fortbewegt. In dem in Figur 3 gezeigten Beispiel bewegt sich der sensible Bereich 4 in der Zeichnungsebene nach links, wobei Figur 3 eine Momentaufnahme zu dem ersten Zeitpunkt zeigt. Vor dem ersten Zeitpunkt verlief der erste Abschnitt 13a der Lichtlinie 13 zu einem ersten weiteren Zeitpunkt durch den ersten Radarstrahlbereich 11a, der zweite Abschnitt 13b der Lichtlinie 13 zu einem zweiten weiteren Zeitpunkt durch den zweiten Radarstrahlbereich 11b und der dritte Abschnitt 13c der Lichtlinie 13 zu einem dritten weiteren Zeitpunkt durch den dritten Radarstrahlbereich 11c, wobei der erste weitere Zeitpunkt am kürzesten und der zweite weitere Zeitpunkt am längsten vor dem in Figur 3 als gegenwärtig abgebildeten ersten Zeitpunkt lag.

In einer nicht gezeigten Auswerteeinheit, die beispielweise mit geeigneter Software auf einem Computer implementiert sein kann, können die zu dem ersten Zeitpunkt aus dem ersten Radarstrahlbereich 11a gewonnenen Abstandsdaten mit den zu dem ersten weiteren Zeitpunkt aus dem ersten Abschnitt 13a der Lichtlinie 13 gewonnenen Abstandsdaten gepaart werden und gleichermaßen die Daten aus den beiden anderen Radarstrahlbereichen 11b, 11c und Abschnitten 13b, 13c der Lichtlinie 13. Durch Subtraktion der Wertepaare können Einbettungsabstände der Festigkeitsträger 2 unter der inneren Oberfläche des Fahrzeugreifens 1 in den drei Radarstrahlbereichen 11a, 11b, 11c gewonnen werden. Die für den ersten Zeitpunkt und die drei weiteren Zeitpunkte beschriebene Prozedur kann mit einer geeigneten Abtastrate während wenigstens einer vollen Umdrehung des Fahrzeugreifens 1 kontinuierlich wiederholt werden, sodass die Lage der Festigkeitsträger 2 in dem gesamten sensiblen Schulterbereich 4 des Fahrzeugreifens 1 engmaschig bestimmt ist.

### Bezugszeichenliste

- 1: technischer Gummiartikel / Fahrzeugreifen
- 1a: Laufstreifen
- 1b: Seitenwand
- 2: Festigkeitsträger
- 3: Karkasse
- 4: sensibler Bereich / Schulterbereich
- 5: Vorrichtung zur Inspektion von technischen Gummiartikeln
- 6a: (erster) Radarabstandsmesser
- 6b: (zweiter) Radarabstandsmesser
- 6c: (dritter) Radarabstandsmesser
- 7: Lichtabstandsmesser
- 8: Radialrichtung
- 9: Axialrichtung
- 10: Umfangsrichtung / zweite Richtung
- 11a: (erster) Radarstrahlbereich
- 11b: (zweiter) Radarstrahlbereich
- 11c: (dritter) Radarstrahlbereich
- 12: Querrichtung / erste Richtung
- 13: Lichtlinie
- 13a: erster Abschnitt (der Lichtlinie)
- 13b: zweiter Abschnitt (der Lichtlinie)
- 13c: dritter Abschnitt (der Lichtlinie)

## Patentansprüche

1. Verfahren zur Inspektion von technischen Gummiartikeln (1) mit metallischen Festigkeitsträgern (2), wobei die technischen Gummiartikel (1) Fahrzeugreifen oder Komponenten von Fahrzeugreifen sind, wobei ein technischer Gummiartikel (1) mit einer Oberfläche bereitgestellt wird, wobei unter der Oberfläche in einem Einbettungsabstand metallische Festigkeitsträger (2) verlaufen, wobei zwei oder mehr Radarabstandsmesser (6a, 6b, 6c) Positionen der Festigkeitsträger (2) vermessen, wobei die Strahlung der Radarabstandsmesser (6a, 6b, 6c) zu einem ersten Zeitpunkt zwei oder mehr in einer ersten Richtung (12) gegeneinander verschobene Radarstrahlbereiche (11a, 11b, 11c) auf der Oberfläche des technischen Gummiartikels (1) durchdringt, wobei ein Lichtabstandsmesser (7) die Oberfläche des technischen Gummiartikels (1) vermisst, wobei eine Relativbewegung zwischen dem Gummiartikel (1) einerseits und den Radarabstandmessern (6a, 6b, 6c) und dem Lichtabstandsmesser (7) andererseits vollführt wird, wobei die Relativbewegung parallel zu der Oberfläche des technischen Gummiartikels (1) und senkrecht zu der ersten Richtung (12) verläuft,
**dadurch gekennzeichnet,**
**dass** der Lichtabstandsmesser (7) die Oberfläche des technischen Gummiartikels (1) in einer Weise vermisst, dass eine Lichtlinie (13) auf die Oberfläche des technischen Gummiartikels (1) projiziert und ausgewertet wird, wobei die Lichtlinie (13) im Rahmen der Relativbewegung so gegenüber der Oberfläche verschoben wird, dass für jeden Radarabstandsmesser (6a, 6b, 6c) jeweils ein weiterer Zeitpunkt existiert, zu dem die Lichtlinie (13) wenigstens teilweise durch den zu einem jeweiligen Radarabstandsmesser (6a, 6b, 6c) gehörigen Radarstrahlbereich (11a, 11b, 11c) verläuft oder verlaufen ist.

2. Verfahren nach Anspruch 1, **dadurch gekennzeichnet, dass** zwei benachbarte Radarstrahlbereiche (11a, 11b, 11c) in der ersten Richtung (12) um nicht mehr als einen Durchmesser eines Radarstrahlbereichs (11a, 11b, 11c) gegeneinander verschoben sind.

3. Verfahren nach einem der Ansprüche 1 oder 2, **dadurch gekennzeichnet, dass** die Radarstrahlbereiche (11a, 11b, 11c) zusätzlich in einer zweiten Richtung (10) gegeneinander verschoben sind, wobei die zweite Richtung (10) senkrecht zu der ersten Richtung (12) verläuft.

4. Verfahren nach einem der Ansprüche 1 bis 3, **dadurch gekennzeichnet, dass** die Radarabstandsmesser (6a, 6b, 6c) Abstandsmessungen unter Modulation des Sendesignals durchführen.

5. Verfahren nach einem der Ansprüche 1 bis 4, **dadurch gekennzeichnet, dass** die Lichtlinie (13) parallel zu der ersten Richtung (12) verläuft.

6. Verfahren nach einem der Ansprüche 1 bis 5, **dadurch gekennzeichnet, dass** für jeden Radarabstandsmesser (6a, 6b, 6c) jeweils ein weiterer Zeitpunkt existiert, zu dem die Lichtlinie (13) vollständig durch den zu einem jeweiligen Radarabstandsmesser (6a, 6b, 6c) gehörigen Radarstrahlbereich (11a, 11b, 11c) verläuft oder verlaufen ist.

7. Verfahren nach einem der Ansprüche 1 bis 6, **dadurch gekennzeichnet, dass** die Lichtlinie (13) eine Laserlinie (13) aus einem Linienlaser (7) ist.

8. Verfahren nach einem der Ansprüche 1 bis 7, **dadurch gekennzeichnet, dass** der Lichtabstandsmesser (7) nach der Lichtschnittmethode arbeitet.

9. Verfahren nach einem der Ansprüche 1 bis 8, **dadurch gekennzeichnet, dass** der Lichtabstandsmesser (7) entlang der Lichtlinie (13) eine Topographie der Oberfläche vermisst.

10. Verfahren nach einem der Ansprüche 1 bis 9, **dadurch gekennzeichnet, dass** die Relativbewegung kontinuierlich und mit gleichbleibender Geschwindigkeit vollzogen wird, wobei die Radarabstandsmesser (6a, 6b, 6c) und der Lichtabstandsmesser (7) mit kontinuierlichen Abtastraten Abstände zu den Festigkeitsträgern (2) bzw. Abstände zu der Oberfläche des technischen Gummiartikels (1) ermitteln, wobei die Abstände als Zeitreihen aufgezeichnet werden.

11. Verfahren nach Anspruch 10, **dadurch gekennzeichnet, dass** die aufgezeichneten Abstände aus den Radarabstandmessern (6a, 6b, 6c) und dem Lichtabstandsmesser (7) einander so zugeordnet werden, dass Abstände zu den Festigkeitsträgern (2) und Abständen zu der Oberfläche aus in Richtung der Relativbewegung möglichst nahe beieinander gelegenen Positionen miteinander gepaart werden.

12. Verfahren nach Anspruch 10 oder 11, **dadurch gekennzeichnet, dass** der Lichtabstandsmesser (7) entlang der Lichtlinie (13) abschnittweise mehrere Abstände aufzeichnet, wobei die aufgezeichneten Abstände aus den Radarabstandmessern (6a, 6b, 6c) und dem Lichtabstandsmesser (7) einander so zugeordnet werden, dass Abstände zu den Festigkeitsträgern (2) aus einem jeweiligen Radarabstandsmesser (6a, 6b, 6c) mit solchen Abständen zu der Oberfläche aus dem Lichtabstandsmesser (7) gepaart werden, die aus einem Abschnitt (13a, 13b, 13c) der Lichtlinie (13) stammen, der im Rahmen der Relativbewegung so gegenüber der Oberfläche verschoben wird, dass der Abschnitt (13a, 13b, 13c) zu einem der weiteren Zeitpunkte wenigstens teilweise durch den Radarstrahlbereich (11a, 11b, 11c) des jeweiligen Radarabstandsmessers (6a, 6b, 6c) verläuft oder verlaufen ist.

13. Verfahren nach einem der Ansprüche 1 bis 12, **dadurch gekennzeichnet, dass** der technische Gummiartikel (1) ein Fahrzeugreifen (1) ist, wobei die Oberfläche eine innere Oberfläche des Fahrzeugreifens (1) ist, wobei die Radarstrahlungsbereiche (11a, 11b, 11c) in einem Schulterbereich (4) des Fahrzeugreifens angeordnet sind und wobei die erste Richtung (12) einer Querrichtung (12) des Fahrzeugreifens (1) entspricht, wobei die Relativbewegung durch Rotation des Fahrzeugreifens (1) um die Axialrichtung (9) vollzogen wird.

14. Vorrichtung (5) zur Inspektion von technischen Gummiartikeln (1) mit metallischen Festigkeitsträgern (2), wobei die technischen Gummiartikel (1) Fahrzeugreifen oder Komponenten von Fahrzeugreifen sind, umfassend zwei oder mehr Radarabstandsmesser (6a, 6b, 6c), einen Lichtabstandsmesser (7) und ein Relativbewegungsmittel, wobei die Radarabstandmesser (6a, 6b, 6c) so ausgerichtet sind, dass ihre Strahlung zu einem ersten Zeitpunkt zwei oder mehr in einer ersten Richtung (12) gegeneinander verschobene Radarstrahlbereiche (11a, 11b, 11c) auf einer Oberfläche des technischen Gummiartikels (1) durchdringen kann, wobei das Relativbewegungsmittel dazu ausgelegt ist, eine Relativbewegung zwischen dem Gummiartikel (1) einerseits und den Radarabstandmessern (6a, 6b, 6c) und dem Lichtabstandsmesser (7) andererseits zu vollführen, wobei die Relativbewegung parallel zu der Oberfläche des technischen Gummiartikels (1) und senkrecht zu der ersten Richtung (12) verläuft,
**dadurch gekennzeichnet,**
**dass** der Lichtabstandsmesser (7) dazu ausgelegt ist, eine Lichtlinie (13) auf die Oberfläche des technischen Gummiartikels (1) zu projizieren und auszuwerten, wobei die Vorrichtung (5) so eingerichtet ist, dass die Lichtlinie (13) im Rahmen der Relativbewegung so gegenüber der Oberfläche verschoben werden kann, dass für jeden Radarabstandsmesser (6a, 6b, 6c) jeweils ein weiterer Zeitpunkt existiert, zu dem die Lichtlinie (13) wenigstens teilweise durch den zu einem jeweiligen Radarabstandsmesser (6a, 6b, 6c) gehörigen Radarstrahlbereich (11a, 11b, 11c) verläuft oder verlaufen ist.

15. Vorrichtung (5) nach Anspruch 14, **dadurch gekennzeichnet, dass** die Vorrichtung (5) zur Inspektion von Fahrzeugreifen (1) ausgelegt ist, wobei die Oberfläche eine innere Oberfläche des Fahrzeugreifens (1) ist, wobei die erste Richtung (12) die Querrichtung (12) des Fahrzeugreifens (1) ist, wobei die Verschiebung der Radarstrahlbereiche (11a, 11b, 11c) in der ersten Richtung (12) dadurch erreicht wird, dass die Radarabstandsmesser (6a, 6b, 6c) um eine gemeinsame Achse verdreht angeordnet sind.

## Claims

1. Method for the inspection of technical rubber articles (1) with metallic reinforcement materials (2), wherein the technical rubber articles (1) are vehicle tyres or components of vehicle tyres, wherein a technical rubber article (1) with a surface is provided, wherein metallic reinforcement materials (2) run under the surface at an embedding spacing, wherein two or more radar distance meters (6a, 6b, 6c) measure positions of the reinforcement materials (2), where the radiation of the radar distance meters (6a, 6b, 6c) penetrates, at a first time, two or more radar beam regions (11a, 11b, 11c) shifted in a first direction (12) with respect to each other on the surface of the technical rubber article (1), wherein a light distance meter (7) measures the surface of the technical rubber article (1), wherein a relative movement between the rubber article (1) firstly and the radar distance meters (6a, 6b, 6c) and the light distance meter (7) secondly is carried out, wherein the relative movement runs parallel to the surface of the technical rubber article (1) and perpendicularly with respect to the first direction (12),
**characterized**
**in that** the light distance meter (7) measures the surface of the technical rubber article (1) in such a way that a light line (13) is projected onto the surface of the technical rubber article (1) and evaluated, wherein the light line (13) is shifted relative to the surface in the context of the relative movement in such a way that, for each radar distance meter (6a, 6b, 6c), there is in each case a further time, at which the light line (13) runs or has run at least partially through the radar beam region (11a, 11b, 11c) belonging to a respective radar distance meter (6a, 6b, 6c).

2. Method according to Claim 1, **characterized in that** two adjacent radar beam regions (11a, 11b, 11c) are shifted with respect to each other in the first direction (12) by no more than a diameter of a radar beam region (11a, 11b, 11c).

3. Method according to either of Claims 1 and 2, **characterized in that** the radar beam regions (11a, 11b, 11c) are additionally shifted in a second direction (10) with respect to each other, wherein the second direction (10) runs perpendicularly with respect to the first direction (12).

4. Method according to one of Claims 1 to 3, **characterized in that** the radar distance meters (6a, 6b, 6c) carry out distance measurements with modulation of the transmission signal.

5. Method according to one of Claims 1 to 4, **characterized in that** the light line (13) runs parallel to the first direction (12).

6. Method according to one of Claims 1 to 5, **characterized in that**, for each radar distance meter (6a, 6b, 6c), there is in each case a further time, at which the light line (13) runs or has run completely through the radar beam region (11a, 11b, 11c) belonging to a respective radar distance meter (6a, 6b, 6c).

7. Method according to one of Claims 1 to 6, **characterized in that** the light line (13) is a laser line (13) from a line laser (7).

8. Method according to one of Claims 1 to 7, **characterized in that** the light distance meter (7) operates according to the light section method.

9. Method according to one of Claims 1 to 8, **characterized in that** the light distance meter (7) measures a topography of the surface along the light line (13).

10. Method according to one of Claims 1 to 9, **characterized in that** the relative movement is carried out continuously and at a constant speed, wherein the radar distance meters (6a, 6b, 6c) and the light distance meter (7) determine distances from the reinforcement materials (2) or distances from the surface of the technical rubber article (1) at continuous sampling rates, wherein the distances are recorded as time series.

11. Method according to Claim 10, **characterized in that** the recorded distances coming from the radar distance meters (6a, 6b, 6c) and the light distance meter (7) are assigned to each other in such a way that distances from the reinforcement materials (2) and distances from the surface from positions located as close as possible to one another in the direction of the relative movement are paired with each other.

12. Method according to Claim 10 or 11, **characterized in that** the light distance meter (7) records a plurality of distances in sections along the light line (13), wherein the recorded distances coming from the radar distance meters (6a, 6b, 6c) and the light distance meter (7) are assigned to each other in such a way that distances from the reinforcement materials (2) coming from a respective radar distance meter (6a, 6b, 6c) are paired with such distances from the surface coming from the light distance meter (7), which come from a section (13a, 13b, 13c) of the light line (13) which is shifted relative to the surface in the context of the relative movement in such a way that the section (13a, 13b, 13c) at one of the further times runs or has run at least partially through the radar beam region (11a, 11b, 11c) of the respective radar distance meter (6a, 6b, 6c).

13. Method according to one of Claims 1 to 12, **characterized in that** the technical rubber article (1) is a vehicle tyre (1), wherein the surface is an inner surface of the vehicle tyre (1), wherein the radar radiation regions (11a, 11b, 11c) are arranged in a shoulder region (4) of the vehicle tyre, and wherein the first direction (12) corresponds to a transverse direction (12) of the vehicle tyre (1), wherein the relative movement is carried out by rotation of the vehicle tyre (1) about the axial direction (9).

14. Device (5) for the inspection of technical rubber articles (1) with metallic reinforcement materials (2), wherein the technical rubber articles (1) are vehicle tyres or components of vehicle tyres, comprising two or more radar distance meters (6a, 6b, 6c), a light distance meter (7) and a relative movement means, wherein the radar distance meters (6a, 6b, 6c) are oriented in such a way that, at a first time, their radiation can penetrate two or more radar beam regions (11a, 11b, 11c) shifted with respect to each other in a first direction (12) on a surface of the technical rubber article (1), wherein the relative movement means is designed to carry out a relative movement between the rubber article (1) firstly and the radar distance meters (6a, 6b, 6c) and the light distance meter (7) secondly, wherein the relative movement runs parallel to the surface of the technical rubber article (1) and perpendicularly with respect to the first direction (12),
**characterized**
**in that** the light distance meter (7) is designed to project a light line (13) onto the surface of the technical rubber article (1) and to evaluate it, wherein the device (5) is designed such that the light line (13) can be shifted relative to the surface in the context of the relative movement in such a way that, for each radar distance meter (6a, 6b, 6c), there is in each case a further time, at which the light line (13) runs or has run at least partially through the radar beam region (11a, 11b, 11c) belonging to a respective radar distance meter (6a, 6b, 6c).

15. Device (5) according to Claim 14, **characterized in that** the device (5) is designed for the inspection of vehicle tyres (1), wherein the surface is an inner surface of the vehicle tyre (1), wherein the first direction (12) is the transverse direction (12) of the vehicle tyre (1), wherein the shifting of the radar beam regions (11a, 11b, 11c) in the first direction (12) is achieved by virtue of the fact that the radar distance meters (6a, 6b, 6c) are rotated about a common axis.

## Revendications

1. Procédé d'inspection d'articles techniques en caoutchouc (1) avec des renforts métalliques (2), les articles techniques en caoutchouc (1) étant des pneus de véhicule ou des composants de pneus de véhicule, un article technique en caoutchouc (1) étant fourni avec une surface, des renforts métalliques (2) s'étendant à une distance d'insertion sous la surface, deux télémètres radar (6a, 6b, 6c) ou plus mesurant des positions des renforts (2), le rayonnement des télémètres radar (6a, 6b, 6c) traversant à un premier moment deux zones de faisceau radar (11a, 11b, 11c) ou plus coulissées l'une à l'encontre de l'autre dans une première direction (12) sur la surface de l'article technique en caoutchouc (1), un télémètre optique (7) mesurant la surface de l'article technique en caoutchouc (1), un déplacement relatif entre l'article en caoutchouc (1) d'une part et les télémètres radar (6a, 6b, 6c) et le télémètre optique (7) d'autre part étant réalisé, le déplacement relatif s'étendant parallèlement à la surface de l'article technique en caoutchouc (1) et perpendiculairement à la première direction (12),
**caractérisé en ce**
**que** le télémètre optique (7) mesure la surface de l'article technique en caoutchouc (1) de telle manière qu'une ligne lumineuse (13) est projetée sur la surface de l'article technique en caoutchouc (1) et est évaluée, la ligne lumineuse (13) étant coulissée, dans le cadre du déplacement relatif, de telle sorte par rapport à la surface qu'il existe respectivement pour chaque télémètre radar (6a, 6b, 6c) un autre moment, auquel la ligne lumineuse (13) traverse ou a traversé au moins en partie la zone de faisceau radar (11a, 11b, 11c) appartenant à un télémètre radar (6a, 6b, 6c) respectif.

2. Procédé selon la revendication 1, **caractérisé en ce que** deux zones de faisceau radar (11a, 11b, 11c) adjacentes sont coulissées l'une à l'encontre de l'autre d'au plus un diamètre d'une zone de faisceau radar (11a, 11b, 11c) dans la première direction (12).

3. Procédé selon l'une des revendications 1 ou 2, **caractérisé en ce que** les zones de faisceau radar (11a, 11b, 11c) sont coulissées l'une à l'encontre de l'autre en supplément dans une deuxième direction (10), la deuxième direction (10) s'étendant perpendiculairement à la première direction (12).

4. Procédé selon l'une des revendications 1 à 3, **caractérisé en ce que** les télémètres radar (6a, 6b, 6c) effectuent des mesures de distance en modulant le signal d'émission.

5. Procédé selon l'une des revendications 1 à 4, **caractérisé en ce que** la ligne lumineuse (13) s'étend parallèlement à la première direction (12).

6. Procédé selon l'une des revendications 1 à 5, **caractérisé en ce qu'**il existe pour chaque télémètre radar (6a, 6b, 6c) respectivement un autre moment, auquel la ligne lumineuse (13) traverse ou a traversé totalement la zone de faisceau radar (11a, 11b, 11c) appartenant à un télémètre radar (6a, 6b, 6c) respectif.

7. Procédé selon l'une des revendications 1 à 6, **caractérisé en ce que** la ligne lumineuse (13) est une ligne laser (13) provenant d'un laser linéaire (7).

8. Procédé selon l'une des revendications 1 à 7, **caractérisé en ce que** le télémètre optique (7) fonctionne selon la méthode de la coupe optique.

9. Procédé selon l'une des revendications 1 à 8, **caractérisé en ce que** le télémètre optique (7) mesure le long de la ligne lumineuse (13) une topographie de la surface.

10. Procédé selon l'une des revendications 1 à 9, **caractérisé en ce que** le déplacement relatif est exécuté en continu et à une vitesse constante, les télémètres radar (6a, 6b, 6c) et le télémètre optique (7) déterminant à des fréquences de balayage continues des distances par rapport aux renforts (2) ou des distances par rapport à la surface de l'article technique en caoutchouc (1), les distances étant enregistrées sous forme de séries chronologiques.

11. Procédé selon la revendication 10, **caractérisé en ce que** les distances enregistrées provenant des télémètres radar (6a, 6b, 6c) et du télémètre optique (7) sont associées les unes aux autres de telle sorte que des distances par rapport aux renforts (2) et des distances par rapport à la surface à partir de positions aussi proches que possible en direction du déplacement relatif sont appariées les unes aux autres.

12. Procédé selon la revendication 10 ou 11, **caractérisé en ce que** le télémètre optique (7) enregistre par endroits plusieurs distances le long de la ligne lumineuse (13), les distances enregistrées provenant des télémètres radar (6a, 6b, 6c) et du télémètre optique (7) étant associées de telle sorte les unes aux autres que des distances par rapport aux renforts (2) provenant d'un télémètre radar (6a, 6b, 6c) respectif sont appariées à ces distances par rapport à la surface provenant du télémètre optique (7) qui proviennent d'une section (13a, 13b, 13c) de la ligne lumineuse (13), qui est coulissée dans le cadre du déplacement relatif de telle sorte par rapport à la surface que la section (13a, 13b, 13c) traverse ou a traversé à un des autres moments au moins en partie la zone de faisceau radar (11a, 11b, 11c) du télémètre radar (6a, 6b, 6c) respectif.

13. Procédé selon l'une des revendications 1 à 12, **caractérisé en ce que** l'article technique en caoutchouc (1) est un pneu (1) de véhicule, la surface étant une surface intérieure du pneu (1) de véhicule, les zones de rayonnement radar (11a, 11b, 11c) étant disposées dans une zone d'épaulement (4) du pneu de véhicule et la première direction (12) correspondant à une direction transversale (12) du pneu (1) de véhicule, le déplacement relatif étant exécuté par rotation du pneu (1) de véhicule autour de la direction axiale (9).

14. Dispositif (5) d'inspection d'articles techniques en caoutchouc (1) avec des renforts (2) métalliques, les articles techniques en caoutchouc (1) étant des pneus de véhicule ou des composants de pneus de véhicule, comprenant deux télémètres radar (6a, 6b, 6c) ou plus, un télémètre optique (7) et un moyen de déplacement relatif, les télémètres radar (6a, 6b, 6c) étant orientés de telle sorte que leur rayonnement peut traverser, à un premier moment, deux zones de faisceau radar (11a, 11b, 11c) ou plus coulissées l'une à l'encontre de l'autre dans une première direction (12) sur une surface de l'article technique en caoutchouc (1), le moyen de déplacement relatif étant conçu pour réaliser un déplacement relatif entre l'article en caoutchouc (1) d'une part et les télémètres radar (6a, 6b, 6c) et le télémètre optique (7) d'autre part, le déplacement relatif s'étendant parallèlement à la surface de l'article technique en caoutchouc (1) et perpendiculairement à la première direction (12),
**caractérisé en ce**
**que** le télémètre optique (7) est conçu pour projet et évaluer une ligne lumineuse (13) sur la surface de l'article technique en caoutchouc (1), le dispositif (5) étant mis au point de telle sorte que la ligne lumineuse (13) peut être coulissée, dans le cadre du déplacement relatif, de telle sorte par rapport à la surface qu'il existe respectivement pour chaque télémètre radar (6a, 6b, 6c) un autre moment, auquel la ligne lumineuse (13) traverse ou a traversé au moins en partie la zone de faisceau radar (11a, 11b, 11c) appartenant à un télémètre radar (6a, 6b, 6c) respectif.

15. Dispositif (5) selon la revendication 14, **caractérisé en ce que** le dispositif (5) est conçu pour inspecter des pneus (1) de véhicule, la surface étant une surface intérieure du pneu (1) de véhicule, la première direction (12) étant la direction transversale (12) du pneu (1) de véhicule, le coulissement des zones de faisceau radar (11a, 11b, 11c) dans la première direction (12) étant atteint **en ce que** les télémètres radar (6a, 6b, 6c) sont disposés de manière tournée autour d'un axe commun.
